# EUROPEAN PATENT SPECIFICATION

(11) **EP 0 602 031 B1**
(45) Date of publication and mention of the grant of the patent: **23.10.1996**
(21) Application number: 91916410.3
(22) Date of filing: 04.09.1991
(51) Int. Cl.: F41A 19/63, F42B 5/08, F02K 9/95

(54) **THE INITIATION OF PROPELLANTS**
TREIBLADUNGSZUENDER
AMORCAGE D'AGENTS PROPULSIFS

(43) Date of publication of application: 22.06.1994
(73) Proprietor: Royal Ordnance plc, Euxton Chorley Lancashire PR7 6AD (GB)
(72) Inventor: LEE, Peter Raymond, Tunbridge Wells, Kent TN3 0HA (GB); BAKER, Francis Sidney, Ludlow, Shropshire SY8 2PR (GB)
(74) Representative: Foster, Allan Scott
(86) International application number: GB9101499
(87) International publication number: WO9305356

(56) References cited:
- DE-A- 3 810 048
- GB-A- 2 234 335
- GB-A- 2 241 563
- US-A- 3 601 054

## Description

The present invention relates to the initiation of propellants, especially for guns, rockets, gas generators and similar known applications.

Present techniques for the initiation of propellants are not ideal in a number of respects. For example, large calibre guns may incorporate a charge of stick propellant, (ie a collection of propellant sticks) which is initiated by a device known in the United Kingdom as a tube vent electric (TVE). In such a device a hot burning material is caused to deflagrate rapidly by the conversion of an electrical stimulus into hot particle output through holes in its body thereby initiating the surrounding propellant material. Internal ballistics and reproducibility of gun performance are affected. The TVE also occupies a significant fraction of the volume of the propellant charge. The initiatory material in the TVE is moisture-sensitive and is also sensitive to rough usage so the propellant may or may not ignite in the manner predicted and even when it does ignite the burning process may be unpredictable.

Modern gun propellants may comprise compositions formulated to have low vulnerability to attack by bullets, fragments and the like. Such compositions are inherently more difficult to initiate and it may be difficult or impossible to initiate such compositions by conventional techniques.

In rocket motors the design of the propellant igniter presents problems. The igniter throws a rain of rapidly moving burning particles into the propellant charge. The energy of the igniter is often so high that the charge may be damaged, especially at low temperatures, and this can lead to unpredictable ballistics.

US-A-3601054 on which the preamble of claim 1 is based, describes an igniter which is initiated by electromagnetic radiation, the igniter then initiating a separate propellant charge by hot particles ejected into the charge, and therefore, suffering from the disadvantages of prior art TVE's described above.

DE-A-3810 048 describes a firearm having ammunition caused to fire by means of microwaves. However, no explanation is given of the constitution of the ammunition per se.

According to the present invention, there is provided an apparatus, for the initiation of a propellant charge in a combustion chamber, the apparatus comprising said combustion chamber, a charge of propellant in the chamber and means for igniting the propellant of the charge by microwave heating, said means comprising a source of microwave radiation, a microwave transparent window in a wall of said chamber and means for applying microwaves from said source into the said chamber via said window, characterised by the propellant charge, or one or more regions thereof, comprising or containing microwave sensitive material for absorbing microwave energy from said source whereby to heat and ignite the propellant, and in that said chamber is a resonant cavity for the microwaves.

The means for applying microwaves from the said source may be a conventional waveguide structure.

The propellant of the charge is preferably a solid propellant comprising a gun or rocket propellant, although it may also be a propellant for use in a gas generator, eg for use in a gas inflator or base drag retraction of a projectile.

The frequency of microwaves provided by the said source may conveniently be variable so that the frequency may be tuned to match the dimensions of the chamber.

The source may be any known source such as a klystron or a solid state oscillator such as a Gunn diode, avalanche diode or impatt diode.

The frequency of the microwaves coupled into the propellant charge is likely to be in the range 0.1 GHz to 100 GHz.

The required energy density of the microwaves coupled into the propellant charge depends on the microwave sensitive material to be energised. The energy density is likely to be at least 10⁸ watts per kg of material to be excited for a typical lossy dielectric used in conjunction with a typical, eg double base, propellant material. The energy density may however be reduced if the microwave sensitive material is itself more easily ignitable than the propellant.

The propellant charge to be ignited may comprise material which itself is microwave sensitive. For example, propellants containing as major ingredients nitrocellulose and nitroglycerine have been found to show the required sensitivity.

Alternatively, or in addition, a microwave sensitive additive or dopant material may be added to the propellant composition for the purpose of absorbing the energy of the applied microwaves and thereby heating the propellant composition within the charge.

The applied microwaves may be coupled into the microwave sensitive material by any known coupling effect. For example, the microwave sensitive material may comprise one or more strips or portions of a resistive conductor, eg. graphite or aluminium, into which the energy is coupled resistively. Alternatively, the coupling may be direct due to the orientation polarisation of a lossy dielectric which constitutes the microwave sensitive material. Such a dielectric, which may comprise the propellant composition, or one or more portions or regions of an inert microwave sensitive dielectric embedded or implanted therein is preferably sufficiently lossy that the tangent of its loss angle (tans δ) is greater than 0.05, especially greater than 0.1 at its relaxation frequency. Examples of a variety of lossy inert dieletrics are known to those versed in the microwave heating art and are suitable for applicability in the present invention.

The propellant material initiated by the apparatus according to the present invention is not critical to successful operation of the invention, although it has been found that certain propellant materials are especially suitable for microwave initiation. Thus, multi-base compositions ie. those comprising nitroglycerine and nitrocellulose, particulary those having a nitroglycerine content in the range 20 to 50 weight per cent are especially microwave sensitive because of their relatively high dielectric susceptibilities.

Low vulnerability propellants, eg. based upon compositions containing as highly energetic filler component(s) one or more heteroalicyclic nitramines such as RDX or HMX, together with a polymeric binder eg. polyurethane or polyester) may also be initiated by the apparatus of the present invention.

As will be familiar to those skilled in the propellants art, suitable propellant compositions of the above classes may contain as optional additives inert or energetic plasticisers, moderators, flame temperature reducers eg nitroguanidine, antioxidants, flash suppressants etc.

Furthermore, other energetic fillers such as inorganic nitrates or perchlorates, and metallic fuels such as aluminium may partially or wholly replace the highly energetic components of the aforementioned classes of propellants.

The advantages of igniting propellant charges by microwave excitation by the apparatus of the present invention compared with conventional techniques, eg. using a TVE as as described above, are as follows:
(a) no moving parts are necessary;
(b) the burning of the propellant may be controlled to be more uniform reducing unwanted pressure exponents; a uniform flame front can be established from an ignited cylinder of microwave sensitive material which for example allows the internal ballistics in a gun to be improved.
(c) regions of the propellant charge may be selectively ignited by selective placement of the regions of microwave sensitive material within the charge.
(d) propellants of low vulnerability to bullet or other projectile attack may be ignited by the microwave sensitivity of additive(s) incorporated within the charge; the additive in this case is preferably readily ignitable upon heating, eg. rubber or plastics material containing an energetic additive such as an energetic plasticiser, eg. glycidyl azide polymer (GAP) or bis-2,3-dinitropropylacetal/formal (BDNPA/F).

Where the propellant charge used in the apparatus according to the present invention is a charge for a large calibre gun, eg. of calibre 30mm or more, the charge may comprise sticks in which the microwave sensitive material is distributed uniformly throughout the charge. For example, every 1 in 5 to 50 sticks may be doped with microwave sensitive additive. Where the charge is made up of granules or short chopped sticks dopant granules may be spread evenly throughout the charge. Consequently, it is possible by the present invention to produce propellant charges based on sticks, chopped sticks or granules with more predictable light-up and internal ballistics.

Alternatively, the microwave sensitive material may be a region specially located at the centre of a resonant cavity formed by the said chamber.

The microwave sensitive material may itself be embedded in an inert coating, eg. to provide a compatible interface with the propellant material. The coating may be metallic, eg. of aluminium foil, effectively to minimise the dimensions of the resonant cavity or it may for example be an inert plastics material. Numerous inert microwave sensitive materials are known to those familiar with the microwave heating art. For example, materials selected from those described in the following patent specifications can be used as inert microwave sensitive dopants for propellant charge materials, either by direct doping of the propellant material or for inclusion within an intermediate layer to provide propellant compatible coating: GB2065027A, GB2081560B, US4,538,630, US 4,482,239, Canadian 1,108,276, US 4,655,276, European 0242952A.

Where the propellant charge in the apparatus according to the present invention comprises a rocket motor charge, the igniter of the charge may be replaced by a layer of microwave sensitive material placed in a strategic point or in strategic points within the charge. Furthermore, the motor may be constrained to burn in a particular selected way without recourse to complex charge shapes.

Microwaves have been employed in the prior art to heat castable high explosive materials to melt them. For example, explosive fillings have been removed from unexploded shells by this method However, propellants have not hitherto ignited in this way. By heating a propellant material in a controlled arrangement in accordance with the present invention to provide initiation thereof unexpectedly the benefits described above are obtained.

According to the present invention in another aspect a method of initiating a propellant of a propellant charge located in a chamber comprises applying to the charge from a waveguide source through a microwave transparent window microwave energy to ignite the propellant.

Embodiments of the present invention will now be described by way of example with reference to the accompanying drawings in which:
Figure 1 is a cross-sectional side elevation of a gun comprising a microwave ignition arrangement.
Figure 2 is a cross-sectional side elevation of a gun comprising an alternative microwave ignition arrangement.
Figure 3 is a cross-sectional side elevation of a rocket motor comprising a microwave ignition arrangement;
Figure 4 is a perspective view of a propellant charge suitable for use in the rocket motor shown in Figure 3.

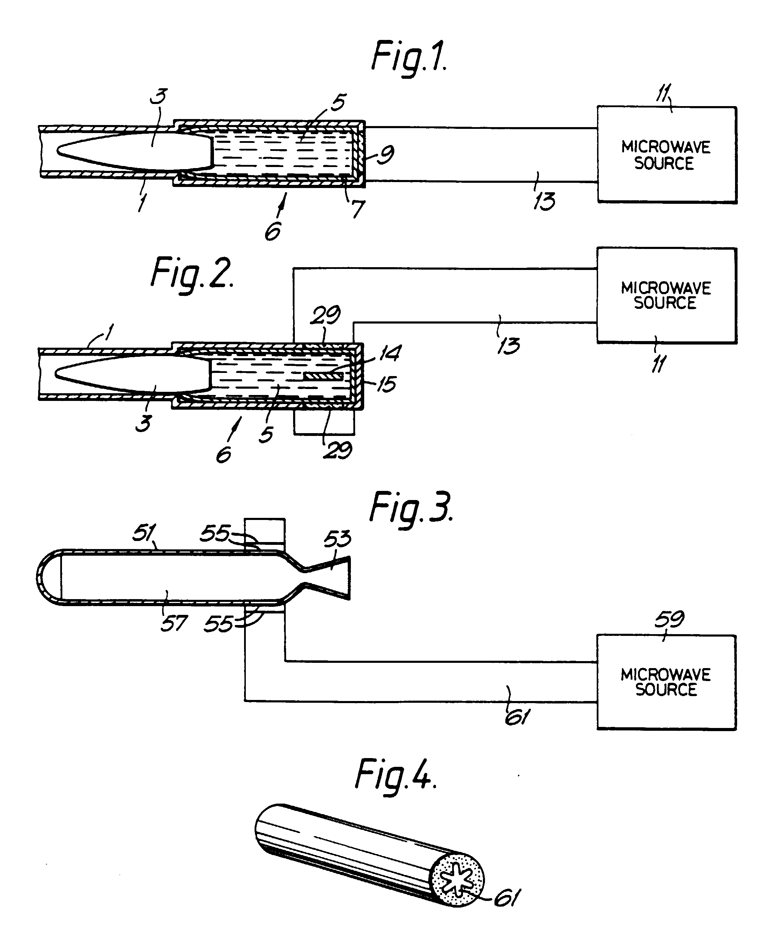

In Figure 1, the gun shown comprises a barrel 1, eg of a hard metal such as steel, in which is housed a shell 3 to be fired from the barrel 1 by a propellant charge 5 contained in an enlarged region 6 of the barrel 1. The charge 5, housed in a dielectric combustible cartridge case 7, has adjacent to its rear end a microwave transparent window 9, eg of a quartz, in a rear end of the enlarged region 6 of the barrel 1 thereby sealing that end Microwaves from a klystron or other microwave source 11 are applied at a selected instant in time in a conventional way via a waveguide 13 through the window 9 to the interior of the chamber enclosed by the enlarged region 6 of the barrel 1 and the window 9 in which the charge 5 is housed. The frequency and power output of the source 11 have been previously adjusted, eg. using the results of prior calibration results, so that the microwave radiation coupled into the charge 5 is suitable to ignite the propellant of the charge 5 in one of the ways described above. Such ignition causes propulsion of the shell 3 along the barrel 1 in a conventional manner.

The gun shown in Figure 2 is similar to that shown in Figure 1, and the like parts are indicated by like reference numerals. However, in Figure 2 the rear window 9 is replaced by a rear metal end plate 15. Instead, there are one or more lateral microwave transparent windows 29 fitted in the side wall of the barrel 1 and the waveguide output from the source 11 is applied via the waveguide 13 to the window(s) 29. The charge 5 incorporates a cylinder 4 of microwave sensitive inert material at the centre of the cylinder bounded by the window(s) 29 which serves as an ignition centre within the charge 5. The shell 3 is propelled along the barrel 1 when appropriate microwave input in applied to the cylinder 4 (from the source 11 via the waveguide 13) and causes sufficient localised heating of the cylinder 4 to ignite the propellant of the charge 3.

In Figure 3 the rocket motor shown comprises a conventional metallic body 51 having at one end a thruster nozzle 53 and in the cylindrical part of the body 51 near the thruster nozzle 53 a dielectric window or windows 55. Inside the body 51 is housed a propellant charge 57. The charge 57 is initiated, when required, by the output from a microwave source 59 coupled into the material of the charge 57 via a waveguide 61 and the window(s) 55.

The body 51 may in an alternative embodiment be made of a dielectric, eg fibre reinforced or strip-wound composite, which itself provides the window 55.

Figure 4 shows an example of a charge suitable for use as the charge 57 shown in Figure 3. The charge contains along its axis a region 61 having a cross-section approximating a star-shape in which region 61 microwave sensitive material is concentrated. Such a region replaces the corresponding hollow star-shaped region which may be provided in a conventional rocket propellant charge to give a selected thrust v time characteristic curve. In the prior art case the internal surface of the charge along the hollow region is ignited by the spitting of hot gases and fragments along the hollow region. Light-up is unpredictable and the charge presents a different surface to the igniferous material if it is pre-cracked by storage or rough handling or by the effect of the ignition process.

The propellant charge shown in Figure 4 shows a required burning curve with a more controlled burning effect.

The cross-sectional area of the star-shaped region 31 may be constant throughout the charge. Alternatively it may vary progressively to give different motor characteristics at different burning times.

The important benefits of cylindrical rocket motor charges having a microwave sensitive material concentrated along a region along the axis of the charge as shown in Figure 4 are as follows:
(a) consistent light-up is provided at all points along the interfaces between the microwave-sensitive material and the undoped propellant;
(b) there is less propensity for the charge to crack under adverse storage and transport conditions especially where the microwave sensitive material has physical and thermomechanical properties similar to the main propellant, eg. where it comprises doped propellant material;
(c) more complex shaped regions may be provided on the axis of the charge (than are currently used with hollow prior art charges) to provide ignition to tailor pressure and thrust v time curve of the rocket motor more precisely and over a greater range.

## Claims

1. An apparatus for the initiation of a propellant charge in a combustion chamber (7;51), the apparatus comprising: said combustion chamber, a charge of propellant (5;57) in the chamber and means for igniting the propellant of the charge by microwave heating, said means comprising a source (11;59) of microwave radiation, a microwave transparent window (9;29;55) in a wall of said chamber and means (13;61) for applying microwaves from said source into said chamber via said window characterised by the propellant charge, or one or more regions thereof, comprising or containing microwave sensitive material for absorbing microwave energy from said source whereby to heat and ignite the propellant, and in that said chamber is a resonant cavity for the microwaves.

2. An apparatus as claimed in claim 1 and wherein the means for applying microwaves from the said source is a waveguide structure (13;61).

3. An apparatus as claimed in claim 1 or claim 2 and wherein the frequency of microwaves provided by the said source is variable so that the frequency may be tuned to match the dimensions of the chamber.

4. An apparatus as claimed in claim 3 and wherein the frequency of the microwaves provided by the source is in the range of 0.1 GHz to 100 GHz.

5. An apparatus as claimed in any one of the preceding claims and wherein an inert dopant material is added to the propellant composition for the purpose of absorbing the energy of the applied microwaves and thereby heating the propellant composition within the charge.

6. An apparatus as claimed in claim 5 and wherein the inert microwave sensitive material comprises one or more strips or portions of a resistive conductor into which the microwave energy may be coupled restively.

7. An apparatus as claimed in any one of the preceding claims 1 to 5 and wherein the propellant composition has one or more portions or regions of said microwave sensitive material embedded or implanted therein, said material comprising a lossy dielectric which is sufficiently lossy that the tangent of its loss angle (tan δ) is greater than 0.05 at its relaxation frequency.

8. An apparatus as claimed in claim 1 and wherein the propellant charge is a charge for a large calibre gun, of calibre 30mm or more, and the charge comprises propellant sticks in which the microwave sensitive material is distributed uniformly throughout the charge.

9. An apparatus as claimed in claim 1 and wherein the charge comprises chopped sticks and granules doped with inert microwave sensitive material are spread evenly throughout the charge.

10. An apparatus as claimed in claim 5 and wherein the inert microwave sensitive material is a region (14;61) specially located at the centre of the resonant cavity formed by said chamber.

11. An apparatus as claimed in claim 5 and wherein the microwave sensitive material is itself embedded in an inert coating to provide a compatible interface with the propellant material.

## Patentansprüche

1. Einrichtung zum Zünden einer Treibmittelladung in einer Brennkammer (7, 51), die aufweist: die genannte Brennkammer, eine Treibmittelladung (5; 57) in der Kammer und Mittel zum Zünden des Treibmittels durch Mikrowellen-Erwärmung, wobei die Mittel eine Mikrowellenstrahlungsquelle (11; 59), ein für Mikrowellen transparentes Fenster (9; 29; 55) in einer Wand der Kammer, und Mittel (13; 61) zum Zuführen von Mikrowellen aus der Quelle in die Kammer durch das genannte Fenster aufweisen, dadurch gekennzeichnet, daß die Treibmittelladung oder ein oder mehrere Bereiche hiervon aus mikrowellenempfindlichem Material besteht oder solches enthält, um durch Absorbieren von Mikrowellenenergie aus der genannten Quelle das Treibmittel zu erhitzen und zu zünden, und daß die genannte Kammer einen Resonanzhohlraum für die Mikrowellen darstellt.

2. Einrichtung nach Anspruch 1, wobei die Mittel zum Zuführen von Mikrowellen von der Quelle eine Wellenleiterkonstruktion (13; 61) darstellen.

3. Einrichtung nach Anspruch 1 oder 2, wobei die Frequenz von durch die Quelle erzeugten Mikrowellen variabel ist, so daß die Frequenz zur Anpassung an die Abmessungen der Kammer abgestimmt werden kann.

4. Einrichtung nach Anspruch 3, wobei die Frequenz der durch die Quelle erzeugten Mikrowellen im Bereich von 0,1 GHz bis 100 GHz liegt.

5. Einrichtung nach einem der vorhergehenden Ansprüche, wobei ein inertes Dotierungsmaterial der Treibmittelzusammensetzung zum Zweck des Absorbierens der Energie der zugeführten Mikrowellen und dadurch des Erhitzens der Treibmittelzusammensetzung in der Ladung zugegeben ist.

6. Einrichtung nach Anspruch 5, wobei das inerte mikrowellenempfindliche Material aus einem oder mehreren Streifen oder Teilen eines Widerstandsleiters besteht, in welchen die Mikrowellenenergie durch ohmsche Kopplung zugeführt wird.

7. Einrichtung nach einem der vorhergehenden Ansprüche 1 bis 5, wobei die Treibmittelzusammensetzung einen oder mehrere darin eingebettete oder eingesetzte Teile oder Bereiche aus dem mikrowellenempfindlichen Material aufweist, das ein in ausreichendem Maß verlustbehaftetes Dielektrikum aufweist, daß die Tangente seines Verlustwinkels (tan δ) bei seiner Kippfrequenz größer als 0,05 ist.

8. Einrichtung nach Anspruch 1, wobei die Treibladung eine Ladung für ein Großkalibergeschütz mit einem Kaliber von 30 mm oder mehr ist und die Ladung Treibmittelstangen enthält, in denen das mikrowellenempfindliche Material gleichmäßig durch die gesamte Ladung verteilt ist.

9. Einrichtung nach Anspruch 1, wobei die Ladung geschnitzelte Stangen und Körner enthält, die mit inertem mikrowellenempfindlichen Material dotiert sind, das gleichmäßig durch die gesamte Ladung verteilt ist.

10. Einrichtung nach Anspruch 5, wobei das inerte mikrowellenempfindliche Material einen besonderen Bereich (14; 61) bildet, der in der Mitte des von der Kammer gebildeten Resonanzhohlraums angeordnet ist.

11. Einrichtung nach Anspruch 5, wobei das mikrowellenempfindliche Material seinerseits in einer inerten Umhüllung eingebettet ist, um eine verträgliche Grenzschicht mit dem Treibmittelmaterial herzustellen.

## Revendications

1. Appareil d'amorçage d'une charge propulsive dans une chambre de combustion (7 ; 51), l'appareil comprenant la chambre de combustion, une charge d'agent propulsif (5 ; 57) placée dans la chambre et un dispositif d'allumage de l'agent propulsif de la charge par chauffage par des hyperfréquences, le dispositif comprenant une source (11 ; 59) d'un rayonnement en hyperfréquences, une fenêtre (9 ; 29 ; 55) transparente aux hyperfréquences placée dans une paroi de la chambre, et un dispositif (13 ; 61) d'application d'hyperfréquences de la source dans la chambre par l'intermédiaire de la fenêtre, caractérisé en ce que la charge propulsive ou une plusieurs régions de cette charge, contiennent ou comprennent une matière sensible aux hyperfréquences, destinée à absorber l'énergie d'hyperfréquences de la source, si bien que l'agent propulsif est chauffé et allumé, et la chambre est une cavité résonante pour les hyperfréquences.

2. Appareil selon la revendication 1, dans lequel le dispositif d'application d'hyperfréquences de ladite source est une structure à guide d'onde (13 ; 61).

3. Appareil selon la revendication 1 ou 2, dans lequel la fréquence des hyperfréquences appliquées par la source est variable si bien que la fréquence peut être accordée afin qu'elle corresponde aux dimensions de la chambre.

4. Appareil selon la revendication 3, dans lequel la fréquence des hyperfréquences données par la source est comprise entre 0,1 et 100 GHz.

5. Appareil selon l'une quelconque des revendications précédentes, dans lequel une matière inerte de dopage est ajoutée à la composition propulsive pour l'absorption d'énergie des microondes appliquées, et pour le chauffage de cette manière de la composition propulsive à l'intérieur de la charge.

6. Appareil selon la revendication 5, dans lequel la matière inerte sensible aux hyperfréquences comprend une ou plusieurs bandes ou parties d'un conducteur résistif dans lequel l'énergie des hyperfréquences peut être couplée de manière résistive.

7. Appareil selon l'une quelconque des revendications précédentes 1 à 5, dans lequel la composition propulsive a une ou plusieurs parties ou régions de la matière sensible aux hyperfréquences enrobées ou implantées à l'intérieur, la matière comprenant une matière diélectrique présentant des pertes de manière suffisante pour que la tangente de son angle de pertes (tgδ) soit supérieure à 0,05 à sa fréquence de relaxation.

8. Appareil selon la revendication 1, dans lequel la charge propulsive est une charge pour canon de gros calibre supérieur ou égal à 30 mm, et la charge comprend des bâtonnets d'agent propulsif dans lesquels la matière sensible aux hyperfréquences est répartie uniformément dans la charge.

9. Appareil selon la revendication 1, dans lequel la charge est formée de bâtonnets coupés, et des granulés dopés par une matière inerte sensible aux hyperfréquences sont répartis uniformément dans toute la charge.

10. Appareil selon la revendication 5, dans lequel la matière inerte sensible aux hyperfréquences est une région (14 ; 61) placée spécialement au centre de la cavité résonante formée par la chambre.

11. Appareil selon la revendication 5, dans lequel la matière sensible aux hyperfréquences est elle-même enrobée dans un revêtement inerte afin qu'elle forme une interface compatible avec la matière propulsive.
